Europäisches Patentamt

European Patent Office

Office européen des brevets

(19)

(11) **EP 0 902 317 A1**

(12) **EUROPÄISCHE PATENTANMELDUNG**

(43) Veröffentlichungstag:
**17.03.1999 Patentblatt 1999/11**

(51) Int. Cl.⁶: **G03B 27/46**, G03B 27/68

(21) Anmeldenummer: **97115930.6**

(22) Anmeldetag: **12.09.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(71) Anmelder: **GRETAG IMAGING AG**
**CH-8105 Regensdorf (CH)**

(72) Erfinder: **Frick, Beat**
**8107 Buchs (CH)**

(74) Vertreter:
**Schwabe - Sandmair - Marx**
**Stuntzstrasse 16**
**81677 München (DE)**

(54) **Vorrichtung zur Herstellung von fotografischen Kopien**

(57)     Die Kopiervorrichtung umfasst eine Vorlagen-positioniereinrichtung (3) zum Transportieren und Positionieren einer Kopiervorlage (F) in eine bzw. einer Kopierposition, eine Kopiermaterialpositioniereinrichtung (2a) zum Transportieren und Positionieren des fotografischen Kopiermaterials (P) in eine bzw. einer Belichtungsposition, eine Beleuchtungseinrichtung (4) zur Beaufschlagung der in der Kopierposition befindlichen Kopiervorlage mit Kopierlicht, ein verstellbares Objektiv (5) zum Abbilden der in der Kopierposition befindlichen Kopiervorlage mit einer einstellbaren Vergrösserung auf das in der Belichtungsposition befindliche Kopiermaterial, eine Objektiveinstelleinrichtung (6) für die Einstellung der Vergrösserung des Objektivs und eine Steuerungseinrichtung (10) für die Vorlagenpositioniereinrichtung (3), die Kopiermaterialpositioniereinrichtung (2a) und die Objektiveinstelleinrichtung (6). Zur Herstellung von beliebigen Ausschnittsvergrösserungen ist das Objektiv (5) im wesentlichen quer zur Transportrichtung (L) der Kopiervorlage mittels einer mit der Steuerungseinrichtung (10) zusammenwirkenden Objektivpositioniereinrichtung (12) verstellbar angeordnet. Zur Festlegung eines zu kopierenden Ausschnitts der Kopiervorlage und einer gewünschten Vergrösserung ist eine mit der Steuerungseinrichtung (10) zusammenwirkende Bedienungseinrichtung (13,14) vorgesehen. Die Steuerungseinrichtung (10) steuert aufgrund des mittels der Bedienungseinrichtung festgelegten Ausschnitts und der festgelegten Vergrösserung die Vorlagenpositioniereinrichtung (3), die Objektivpositioniereinrichtung (12) und die Objektiveinstelleinrichtung (6).

*Fig. 1*

**Beschreibung**

Die Erfindung betrifft eine Vorrichtung zur Herstellung von fotografischen Kopien von einer Kopiervorlage auf einem fotografischen Kopiermaterial gemäss dem Oberbegriff des unabhängigen Anspruchs.

Normalerweise wird mit solchen Kopiervorrichtungen jeweils die gesamte Kopiervorlage - üblicherweise ein Bild auf einem Filmstreifen - auf das Kopiermaterial abgebildet und kopiert. Dabei ist die Kopiervorlage in Kopierposition so auf einer Vorlagenbühne angeordnet, dass ihr Zentrum in der optischen Achse des Abbildungsobjektivs liegt. Es sind auch schon Kopiervorrichtungen bekannt, mit denen Ausschnittsvergrösserungen hergestellt werden können. Dabei ist es erforderlich, die Kopiervorlage so zu positionieren, dass das Zentrum des zu kopierenden Ausschnitts der Kopiervorlage in der optischen Achse des Abbildungsobjektivs liegt. Für diesen Zweck sind diese Kopiervorrichtungen mit speziellen Vorlagenbühnen ausgestattet, welche eine entsprechende Positionierung der Kopiervorlage in zwei Dimensionen zulassen.

Durch die vorliegende Erfindung soll die Herstellung von Ausschnittsvergrösserungen vereinfacht werden. Insbesondere soll eine Kopiervorrichtung der gattungsgemässen Art dahingehend verbessert werden, dass die Herstellung von beliebigen Ausschnittsvergrösserungen ohne spezielle Vorlagenbühnen möglich ist.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Durch die erfindungsgemässe Querverstellbarkeit des Abbildungsobjektivs braucht die Kopiervorlage nicht in zwei Richtungen, sondern nur in Laufrichtung der Kopiervorlagen so positioniert zu werden, dass der zu kopierende Ausschnitt in die Kopierposition zu liegen kommt. Dies kann mit den für den Vorlagentransport üblicherweise ohnehin vorhandenen Transportmitteln realisiert werden. Anstelle der Positionierung der Kopiervorlage in Richtung quer zur Laufrichtung wird das Abbildungsobjektiv entsprechend verstellt, so dass der gewünschte Ausschnitt der Kopiervorlage schliesslich wieder zentrisch auf das Kopiermaterial aufkopiert wird. Eine spezielle Vorlagenbühne mit zwei Positionierungsfreiheitsgraden ist somit nicht erforderlich.

Eine ganz besonders vorteilhafte Ausführungsform der Erfindung sieht eine Bedienungseinrichtung vor, mittels welcher der zu kopierende Ausschnitt der Kopiervorlage und die gewünschte Vergrösserung für den Benutzer sehr einfach festgelegt werden können. Ganz besonders vorteilhaft ist es, wenn gemäss den Merkmalen des abhängigen Anspruchs 5 ein Bildschirm vorgesehen ist, auf dem die Kopiervorlage dargestellt und der durch manuelle Eingabemittel festgelegte Ausschnitt visuell kenntlich gemacht ist. Die Bedienungseinrichtung liefert entsprechend dem festgelegten Ausschnitt und der festgelegten Vergrösserung Eingangssignale an die Steuerungseinrichtung, und diese nimmt entsprechend die Positionierung der Kopiervorlage und des Objektivs sowie die Einstellung der Vergrösserung des letzteren automatisch vor.

Im folgenden wird die Erfindung anhand der Zeichnung näher erläutert. Es zeigen:

Fig. 1          ein Prinzipschema der erfindungsgemässen Vorrichtung,

Fig. 2-5        je eine Skizze zur Erläuterung der Funktionsabläufe und

Fig. 6          ein Objektivkarussell.

In der Zeichnung sind lediglich die für das Verständnis der Erfindung erforderlichen Komponenten der Kopiervorrichtung dargestellt. Es sind dies zunächst die klassischen Komponenten, wie sie bei vielen fotografischen Printern zu finden sind, nämlich eine Vorlagenbühne 1 mit einem Kopierfenster 1a, eine Papierbühne 2 mit einem motorisch angetriebenen Förderband 2a motorisch angetriebene Transportwalzen 3 für eine Kopiervorlage F, eine Beleuchtungseinrichtung 4 für die auf der Vorlagenbühne 1 befindliche Kopiervorlage, ein auf einem Objektivkarussell 12 montiertes Abbildungsobjektiv 5 mit einstellbarer Vergrösserung (Zoom-Objektiv), eine Objektiveinstelleinrichtung 6 (Zoom-Antrieb), eine Vorratsrolle 7 für Kopiermaterial P, motorisch angetriebene Transportwalzen 8 zum Fördern des Kopiermaterials P von der Vorratsrolle 7 auf die Papierbühne 2, eine Schneideinrichtung 9 zum Abtrennen von einzelnen Kopiermaterialblättern und eine Steuetungseinrichtung 10 für die Transportwalzen 3 und 8, die Objektiveinstelleinrichtung 6, die Schneideinrichtung 9 und das Förderband 2a der Papierbühne 2. Auf dem Objektivkarussell 12 sind drei weitere Zoom-Objektive montiert, von denen nur das mit 5b bezeichnete dargestellt ist. Der Kopierstrahlengang ist mit K bezeichnet.

Zusätzlich zu den aufgezählten Komponenten ist die Kopiervorrichtung erfindungsgemäss mit einigen weiteren Komponenten versehen, auf welche weiter unten noch näher eingegangen wird. Es sind dies ein Scanner 11 zur bildmässigen fotoelektrischen Abtastung der Kopiervorlage F, eine hier durch das für diese Zwecke speziell ausgebildete Objektivkarussell 12 realisierte Objektivpositioniereinrichtung zur Verstellung (Positionierung) des Abbildungsobjektivs 5 quer (in der Zeichnung senkrecht zur Zeichenebene) zur Transportrichtung L der Kopiervorlage F und eine mit der Steuerungseinrichtung 10 zusammenwirkende Bedienungseinrichtung zur Festlegung des gewünschten zu kopierenden Ausschnitts der Kopiervorlage F sowie der gewünschten Vergrösserung. Die Bedienungseinrichtung selbst umfasst einen Bildschirm 13 zur bildmässigen Darstellung der abgetasteten Kopiervorlage und Eingabemittel 14 in Form einer Tastatur und/oder eines Zeigegeräts ("Maus" oder "Trackball" oder dgl.). Der Scanner 11, der Bildschirm 13, die Eingabemittel 14 und die Objektivpositioniereinrichtung 12 arbeiten ebenfalls mit der Steuerungseinrichtung 10 zusammen bzw. werden von dieser gesteuert.

Die Transportwalzen 3 bilden eine Vorlagenpositioniereinrichtung zum Transport und zur Positionierung der Kopiervorlage F in eine bzw. einer Kopierposition, das Förderband 2a bildet eine Kopiermaterialpositioniereinrichtung zum Transport und zur Positionierung des Kopiermaterials in eine bzw. einer Belichtungsposition.

Zur Herstellung einer normalen (Ganzbild-)Kopie einer Kopiervorlage F wird der Filmstreifen, auf dem sich die zu kopierende Kopiervorlage befindet, mittels der Transportwalzen 3 in Längsrichtung L des Filmstreifens bewegt, bis sich die Kopiervorlage F in Kopierposition im Kopierfenster 1a befindet. Dabei liegt das Zentrum der Kopiervorlage F in der optischen Achse A des Abbildungsobjektivs 5. Ferner wird ein dem gewünschtem Kopieformat entsprechend langes Stück Kopiermaterial P mittels der Transportwalzen 8 von der Vorratsrolle 7 abgezogen mittels der Schneideinrichtung 9 abgetrennt, auf die Papierbühne 2 gelegt und dort mittels des Förderbands 2a in die Belichtungsposition transportiert, in welcher sich das Zentrum des KopiermaterialBlatts P in der optischen Achse A des Abbildungsobjektivs 5 befindet. Weiters wird das Abbildungsobjektiv 5 mittels der Objektiveinstelleinrichtung 6 auf die entsprechende Vergrösserung eingestellt, wobei diese Einstellung im allgemeinen auch mit einer Verstellung des Objektivs in Richtung der optischen Achse A verbunden ist. Schliesslich wird in an sich bekannter Weise die Belichtung des Kopiermaterials P durchgeführt. Alle Vorgänge werden von der Steuerungseinrichtung 10 gesteuert. Soweit entspricht die Funktionsweise der erfindungsgemässen Kopiervorrichtung dem Stand der Technik, so dass der Fachmann keiner näheren Erläuterung bedarf

Die Herstellung von Ausschnittsvergrösserungen verläuft bei der erfindungsgemässen Kopiervorrichtung jedoch anders als bei herkömmlichen Vorrichtungen. Eine wesentliche Rolle spielt dabei die schon erwähnte erfindungsgemässe Bedienungseinrichtung, welche dem Benutzer eine sehr einfache und bequeme Festlegung des zu kopierenden Ausschnitts der Kopiervorlage und der gewünschten Vergrösserung ermöglicht.

Unter Normalposition des Abbildungsobjektivs 5 wird im folgenden diejenige Position des Objektivs 5 verstanden, bei der die optische Achse A des Objektivs durch das Zentrum des Kopierfensters 1a verläuft. Als Normal-Kopierposition ist diejenige Position der Kopiervorlage F bezeichnet, bei der ihr Zentrum in der optischen Achse A des Objektivs 5 liegt, wenn sich dieses in seiner Normalposition befindet. Unter Belichtungsposition ist diejenige Position des Kopiermaterials auf der Papierbühne 2 zu verstehen, bei der das Zentrum des Kopiermaterialblatts P in der optischen Achse A des Objektivs 5 liegt, wenn sich dieses in seiner Normalposition befindet.

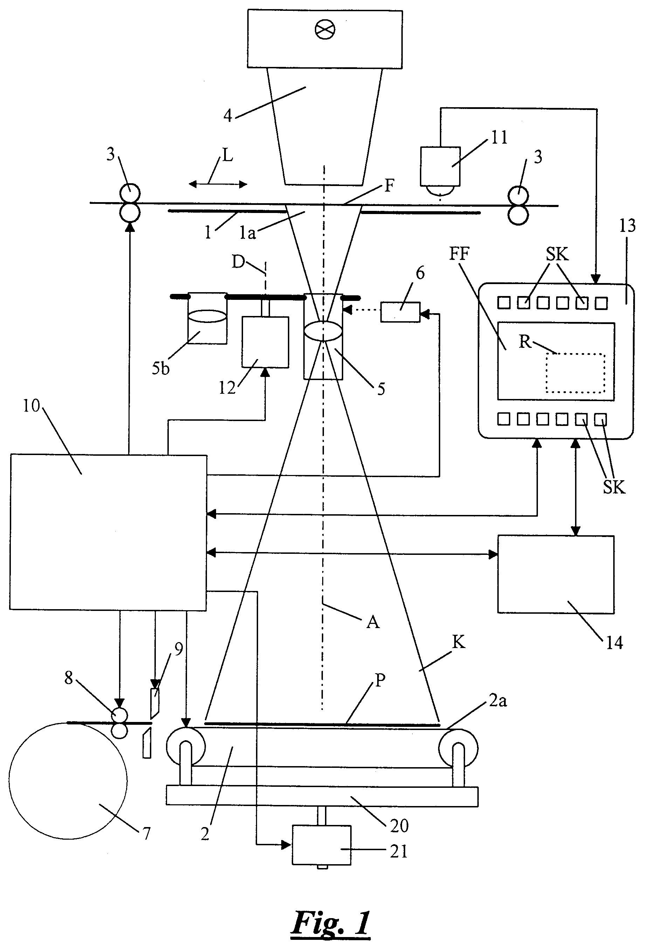

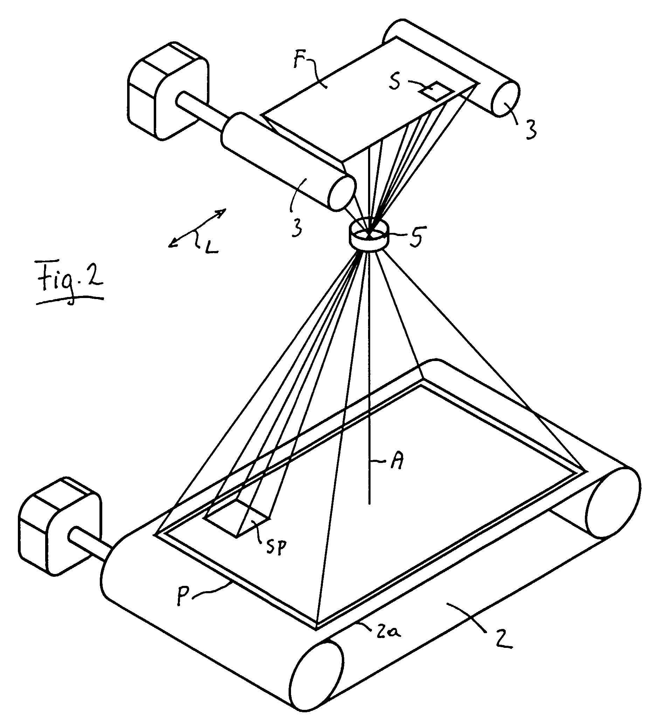

Beim Transport der Kopiervorlage in das Kopierfenster 1a der Vorlagenbühne 1 wird die Kopiervorlage F unter dem Scanner 11 durchgeführt und von diesem bildmässig fotoelektrisch (schwarz/weiss oder vorzugsweise farbig) abgetastet. Die dabei erzeugten Abtastsignale werden nach geeigneter Aufbereitung dazu verwendet, die Kopiervorlage F auf dem Bildschirm 13 darzustellen. Das Abbild der Kopiervorlage F auf dem Bildschirm 13 ist in Fig. 1 mit FF bezeichnet. Die Steuerungseinrichtung 10 erzeugt ihrerseits einen Rahmen R auf dem Bildschirm, welcher den zu kopierenden Ausschnitt der Kopiervorlage bezeichnet. Die Grösse und die Position des Rahmens R kann durch den Benutzer mittels der Eingabemittel 14 verändert werden. Anstelle des Rahmens R kann selbstverständlich auch eine andere optische Markierung des Ausschnitts vorgesehen sein. Ferner wirden auf dem Bildschirm das festgelegte Kopieformat und damit indirekt die festgelegte Vergrösserung angezeigt, wobei das Kopieformat ebenfalls durch die Eingabemittel 14 gewählt werden kann. Die Steuerungseinrichtung 10 nimmt dann anhand des so durch den Benutzer festgelegten zu kopierenden Ausschnitts der Kopiervorlage und des festgelegten Kopieformats bzw. der festgelegten Vergrösserung selbsttätig alle erforderlichen Einstellungen der einzelnen Elemente der Kopiervorrichtung vor. Dazu gehören die Bestimmung der erforderlichen Schnittlänge des Kopiermaterials, das Abschneiden eines entsprechenden Blatts mittels der Schneideinrichtung 9, die Positionierung des Kopiermaterials in Belichtungsposition (Zentrum des Blatts in der optischen Achse des Objektivs in dessen Normalposition) auf der Papierbühne 2 mittels der Kopiermaterialpositionierungseinrichtung 2a, die Einstellung der entsprechenden Vergrösserung des Objektivs 5 mittels der Objektiveinstelleinrichtung 6, die korrekte Positionierung der Kopiervorlage F auf der Vorlagenbühne mittels der Vorlagenpositioniereinrichtung 3 und die korrekte Positionierung des Objektivs 5 quer zur Vorlagentransportrichtung L mittels der Objektivpositioniereinrichtung 12. Die drei letztgenannten Vorgänge werden im folgenden anhand der Figuren 2-5 näher erläutert. Die erforderliche Schnittlänge des Kopiermaterials P ergibt sich aus dem Seitenverhältnis (Länge / Breite) des zu kopierenden Ausschnitts S der Kopiervorlage F multipliziert mit der Breite des gewählten Kopieformats.

Die Fig. 2 zeigt schematisch die Verhältnisse im Normalfall, wenn sich die Kopiervorlage F in Normal-Kopierposition (Zentrum in der optischen Achse A des Objektivs 5 in dessen Normalposition) befindet und flächenfüllend auf ein Blatt Kopiermaterial P abgebildet wird. Bei dieser Normaleinstellung würde ein Ausschnitt S der Kopiervorlage auf einen Ausschnitt SP des Kopiermaterials P abgebildet.

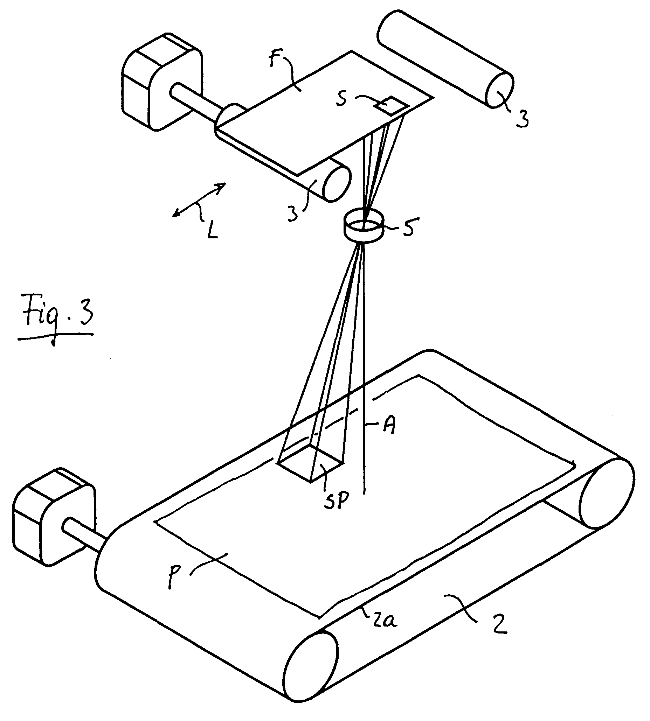

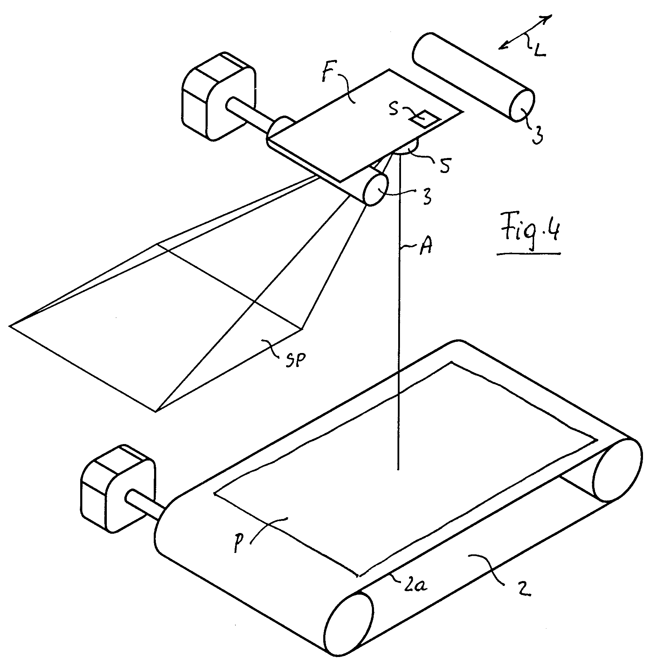

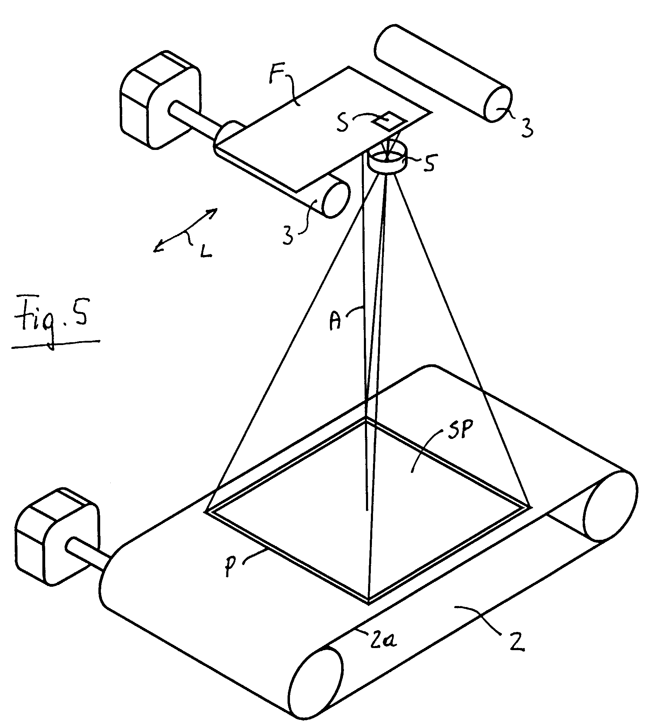

Um nun diesen Ausschnitt S der Kopiervorlage F flächenfüllend auf das Kopiermaterialblatt P abzubilden, sind drei Einstellungen vorzunehmen. Zunächst (Fig. 3) wird die Kopiervorlage F mittels der Vorlagenpositioniereinrichtung (Transportwalzen 3) in (bzw. gegen die) Transportrichtung L (Längsrichtung des Filmstreifens) um den Längsversatz, d.h. den parallel zur Transportrichtung gemessenen Abstand des Zentrums des Ausschnitts S vom Zentrum der Kopiervorlage aus der Normal-Kopierposition verschoben, so dass das Zentrum des Ausschnitts S in einer durch die optische Achse A des Objektivs 5 senkrecht zur Transportrichtung L verlaufenden Ebene liegt. Anders ausgedrückt, der parallel zur Transportrichtung L gemessene Abstand des Ausschnittszentrums von der optischen Achse A ist nach dieser Positionierung der Kopiervorlage null. Anschliessend (Fig. 4) wird die Vergrösserung des Objektivs 5 mittels der Objektiveinstelleinrichtung 6 so eingestellt, dass das Abbild SP des zu kopierenden Ausschnitts S im wesentlichen gleich gross ist wie das Kopiermaterialblatt P. Und schliesslich (Fig. 5) wird das Objektiv 5 mittels der Objektivpositionierungseinrichtung 12 noch quer zur Transportrichtung L soweit verstellt, dass das Abbild SP des zu kopierenden Ausschnitts nicht, wie in Fig. 4 gezeigt, neben dem Kopiermaterial, sondern genau zentrisch auf dem Kopiermaterialblatt P zu liegen kommt. Die in der Praxis vergleichsweise kleine Wegstrecke, um die das Objektiv 5 querverschoben werden muss, hängt von der gewählten Vergrösserung und dem Querversatz des Ausschnitts, d.h dem quer zur Transportrichtung L gemessenen Abstand des Zentrums des Ausschnitts vom Zentrum der gesamten Kopiervorlage ab und ergibt sich aus der Formel  Wegstrecke = Querversatz * Vergrösserung / (Vergrösserung + 1) . Die Reihenfolge der drei Einstellungsschritte ist beliebig. Selbstverständlich kann die Positionierung der Kopiervorlage F und des Objektivs 5 auch direkt, d.h. ohne den Umweg über die Normal-Kopierposition bzw. die Normalposition des Objektivs erfolgen.

Die Steuerungseinrichtung 10 ist durch einen Rechner gebildet bzw. enthält einen solchen, wobei die genannten und im folgenden noch erläuterten Steuerungsfünktionen durch entsprechende Programmierung des Rechners realisiert sind. Es versteht sich, dass die Steuerungseinrichtung 10 bzw. ihr Rechner die physikalischen Parameter der Kopiervorrichtung kennt und mit berücksichtigt. Zu diesen physikalischen Parametern gehören insbesondere die Breite des aktuell verwendeten Kopiermaterials P und die Breiten der alternativ einsetzbaren Kopiermaterialien, die durch die Abmessungen der Papierbühne 2 gegebene maximale Länge eines Kopiermaterialblatts P und der Vergrösserungseinstellbereich (minimal - maximal) des aktuell eingesetzten Abbildungsobjektivs 5 sowie eventuell vorhandener alternativ einsetzbarer Abbildungsobjektive. Ferner ist in der Steuerungseinrichtung 10 bzw. in ihrem Rechner auch eine Liste aller möglichen Kopieformate (z.B. 4" x 4", 4" x 6", 6" x 4", 6" x 9", 8" x 12", 12" x 18") gespeichert.

Das die Bedienungseinrichtung steuernde Programm der Steuerungeinrichtung 10 ist so ausgelegt, dass der Benutzer nur solche Auswahlen (Festlegungen von Kopiervorlage-Ausschnitt und Vergrösserung) treffen kann, welche im Bereich der durch die eingesetzten Komponenten der Kopiervorrichtung und das verwendete Kopiermaterial sowie durch die vorgesehenen Kopieformate gegebenen physikalischen Möglichkeiten der Kopiervorrichtung liegen. Vorzugsweise werden auf dem Bildschirm 13 die Auswahlmöglichkeiten durch Steuerflächen SK (sog. "Softkeys") angezeigt, welche mittels einer Tastatur oder vorzugsweise mittels eines in den Eingabemitteln 14 enthaltenen Zeigegeräts (z.B. "Trackball") angewählt werden können. Unter den gegebenen physikalischen Verhältnissen nicht sinnvolle Auswahlmöglichkeiten werden dabei entweder überhaupt nicht angezeigt oder deaktiviert und entsprechend gekennzeichnet (z.B. in einer anderen Farbe dargestellt). Die Anzeige der Auswahlmöglichkeiten kann dabei auch in Abhängigkeit von Benutzereingaben dynamisch angepasst werden. Legt der Benutzer beispielsweise einen Ausschnitt einer bestimmten Grösse fest, so sind bei gegebener Kopiermaterialbreite nicht mehr alle Vergrösserungseinstellungen bzw. Kopieformate möglich und ihre Anzeige wird entsprechend deaktiviert oder unterdrückt. Zusätzlich oder alternativ kann auch das nächstliegende Kopieformat automatisch gewählt und entsprechend angezeigt werden.

Für die visuelle Festlegung des gewünschten zu kopierenden Ausschnitts der Kopiervorlage können ebenfalls Steuerflächen SK vorgesehen sein, durch deren Betätigung der Rahmen R entsprechend verändert werden kann (z.B. nach links, nach rechts, nach oben, nach unten, grösser, kleiner). Alternativ kann der Rahmen R auch in an sich bekannter Weise mittels eines Zeigegeräts aufziehbar realisiert sein. Vorzugsweise findet auch eine Prüfung des Seitenverhältnisses des festgelegten Ausschnitts statt. Stimmt das Seitenverhältnis mit dem vom Benutzer gewählten Kopieformat nicht überein, so wird automatisch die jenige Kombination von Kopieformat und Seitenverhältnis gewählt und optisch angezeigt, welche der Auswahl des Benutzers am nächsten kommt. Der Benutzer kann diese Kombination akzeptieren oder eine neue Einstellung vornehmen. Selbstverständlich kann auch anders, z.B. durch entsprechende Hinweise, auf nicht relisierbare Auswahlkombinationen reagiert werden.

Die erforderliche Vergrösserung ergibt sich aus dem Verhältnis der Abmessungen des festgelegten Vorlagenausschnitts zu den Abmessungen des festgelegten Kopieformats und wird aus diesem Verhältnis automatisch ermittelt. Da normalerweise nur eine begrenzte Anzahl von (standardisierten) Kopieformaten zur Verfügung stehen, werden dem Benutzer vorzugsweise nicht Vergrösserungseinstellungen sondern Kopieformate zur Auswahl angeboten. Der Benutzer legt damit die Vergrösserung indirekt fest. Selbstverständlich wäre es auch möglich, eine direkte Auswahlmöglichkeit der Vergrösserung vorzusehen, wobei dann analoge Plausibiltätsprüfungen durchgeführt würden. Dementsprechend wird unter "Festlegung der Vergrösserung" sowohl die direkte Einstellung als auch die indirekte Festlegung über die Auswahl eines Kopieformats verstanden.

Falls der Benutzer eine Ausschnittsvergrösserung festlegt, die zwar mit den aktuell eingesetzten Komponenten (Kopiermaterial, Abbildungsobjektiv) nicht, wohl aber mit alternativ zur Verfügung stehenden Komponenten der Kopiervorrichtung realisierbar ist, so wird eine entsprechende Meldung angezeigt, die zum Wechseln der betreffenden Komponente (Kopiermaterial anderer Breite und/oder anderes Abbildungsobjektiv) auffordert. Falls die Kopiervorrichtung wie im gezeigten Ausführungsbeispiel mit einer Objektivwechselvorrichtung (Objektivkarussell 12) ausgestattet kann der Wechsel des Objektivs auch automatisch veranlasst werden.

Das vorstehend beschriebene Ausführungsbeispiel der erfindungsgemässen Kopiervorrichtung lässt nur Vergrösserungen von rechteckigen Ausschnitten zu, deren Seiten parallel zu den Rändern der Kopiervorlage sind. Um auch gegenüber den Rändern der Kopiervorlage verdrehte rechteckige Ausschnitte kopieren zu können, müssen die Kopiervorlage und das Kopiermaterial relativ gegeneinander verdrehbar angeordnet sein. Dies kann z.B. gemäss Fig. 1 dadurch realisiert sein, dass die Papierbühne 2 als Ganze auf einem Drehgestell 20 montiert ist, welches über einen Antriebsmotor 21 definiert um den gewünschten Winkel verdrehbar ist. Die Steuerungseinrichtung 10 wäre dann dazu ausebildet, auf dem Bildschirm 13 der Bedienungseinrichtung auch eine Verdrehung des Rahmens R durch den Benutzer zu ermöglichen und anzuzeigen und die vom Benutzer festgelegte Verdrehung in eine entsprechende Verdrehung der Papierbühne 2 umzusetzen. Alternativ könnte natürlich auch die Vorlagenbühne 1 entsprechend verdreht werden.

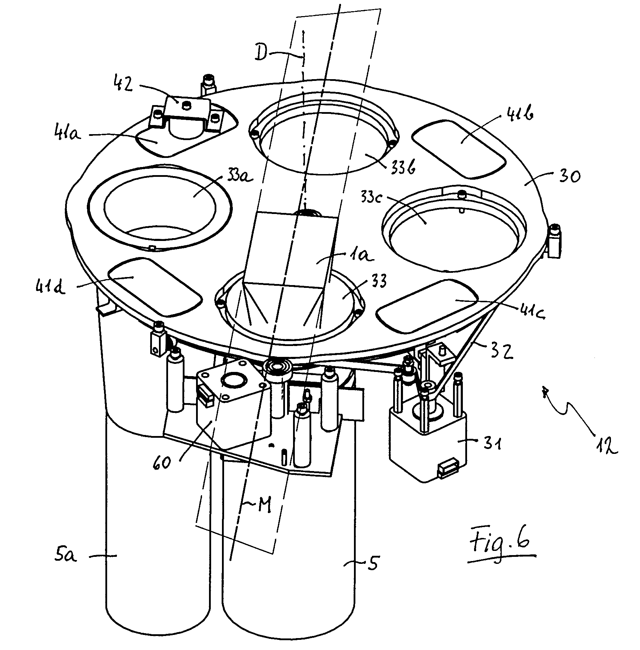

Zur Querverstellung des Abbildungsobjektivs 5 quer zur Transportrichtung L der Kopiervorlage F könnte dieses beispielsweise auf einem motorisch angetriebenen Schieber montiert sein. Vorzugsweise wird dazu aber gemäss einem weiteren Aspekt der Erfindung das Objektivkarussell 12 eingesetzt, welches für diesen Zweck speziell ausgebildet ist und im folgenden anhand der Fig. 6 näher beschrieben wird.

Das als Ganzes mit 12 bezeichnete Objektivkarussel umfasst in an sich bekannter Weise einen Drehteller 30, welcher in der Kopiervorrichtung gelagert und mittels eines ortsfesten, mit der Steuerungseinrichtung 10 zusammenwirkenden Antriebsmotors 31 über einen Riemen 32 um eine zur Vorlagenbühne 1 und zur Papierbühne 2 senkrechte Drehachse D drehbar angetrieben ist. Die Anordnung des Drehtellers 30 in der Kopiervorrichtung ist so, dass die Drehachse D durch eine Mittellinie M verläuft, die durch die Bewegung des Zentrums der Kopiervorlage F bei ihrem Transport in das Kopierfenster 1a definiert ist. Der Drehteller 30 weist vier Aufnahmeöffnungen 33, 33a, 33b, 33c für je ein Abbildungsobjektiv auf; in der Figur sind der Übersichtlichkeit halber nur zwei Objektive 5 und 5a eingezeichnet. Die vier Objektive sind so montiert, dass ihre optischen Achsen parallel zur Drehachse D des Drehtellers 30 verlaufen. Durch Verdrehen des Drehtellers 30 können die Aufnahmeöffnungen 33, 33a-c selektiv unter das Kopierfenster 1a bewegt und damit die Objektive selektiv in den Kopierstrahlengang eingeführt werden. Im Bereich des Kopierfensters 1a ist ferner ein mit der Steuerungseinrichtung 10 zusammenwirkender Antriebsmotor 60 vorgeshen, der jeweils mit dem in Arbeitsposition (unter dem Kopierfenster) befindlichen Objektiv in Eingriff steht und zur Verstellung der Vergrösserung des Objektivs dient. Soweit ist das Objekfivkarussell konventionell und bedarf keiner weiteren Erläuterung.

Bei herkömmlichen Objektivkarussellen dieser Art können die Objektive jeweils nur in eine genau definierte Arbeitsposition gebracht werden, bei welcher die optische Achse des jeweiligen Objektivs durch das Zentrum des Kopierfensters verläuft (Normalposi tion des Objektivs). Der Drehteller 30 kann also nur in einer der Anzahl der vorgesehenen Objektive entsprechenden Anzahl von genau definierten Drehstellungen arretiert werden. Üblicherweise sind dazu mechanische oder elektrische Rastmittel vorgesehen. Gemäss den vorstehenden Ausführungen muss jedoch das jeweils aktive Abbildungsobjektiv in gewissen Grenzen quer verstellbar sein. Um dies zu ermöglichen, weist das Objektivkarussel 12 keine Rastmittel auf, sondern ist mit einer im wesentlichen kontinuierlich arbeitenden mechanischen oder elektromagnetischen Bremseinrichtung versehen, welche eine Arretierung des Drehtellers 30 und damit der Objektive in beliebiger Drehposition jeweils innerhalb eines ausreichend grossen Bereichs um die Normalposition erlaubt. Die Bremseinrichtung ist vorzugsweise durch in den Drehteller 30 integrierte plattenförmige magnetische Pillen 41a-41d sowie einen mit diesen zusammenwirkenden (ortsfesten) Elektromagnet 42 gebildet, der von der Steuerungseinrichtung 10 angesteuert wird. Ferner ist die Kopplung zwischen dem Antriebsmotor 60 für die Einstellung der Vergrösserung des in Arbeitsposition befindlichen Objektivs mechanisch so ausgelegt, dass der Antriebsmotor 60 und die Verstellorgane am Objektiv selbst über den gesamten (relativ kleinen) Bereich, um den das Objektiv in der Praxis querverstellt werden muss, in Eingriff bleiben. Diese Kopplung kann beispielsweise mittels eines geeignet angeordneten Zahnriemens erreicht werden.

Aufgrund der erwähnten speziellen Anordnung der Drehachse D des Drehtellers 30 bewegt sich das Objektiv im Bereich des Kopierfensters 1a annähernd linear und senkrecht zur Transportrichtung L der Kopiervorlage, so dass die für die Herstellung von Ausschnittsvergrösserungen erforderliche Querverstellung des jeweils aktiven Objektivs durch eine entsprechende, von der Steuerungseinrichtung 10 veranlasste Drehbewegung des Drehtellers 30 bewirkt werden kann. Bei Kopiervorrichtungen, die schon mit einem Objektivkarussell ausgestattet sind, kann somit die Querverstellbarkeit des Abbildungsobjektivs ohne grossen zusätzlichen konstruktiven Aufwand realisiert werden. Die annähernde Linearität der Bewegung des Objektivs reicht in der Praxis im allgemeinen aus. Für erhöhte Präzisionsansprüche kann der durch die bogenförmige Bewegung des Objektivs verursachte geringfügige Positionierungsfehler durch eine entsprechende, von der Steuerungseinrichtung 10 bewirkte Verstellung der Kopiervorlage kompensiert werden. Dies gilt sinngemäss auch für den Fall, dass das Objektivkarussell nicht so in der Kopiervorrichtung angeordnet werden kann, dass sich das Abbildungsobjektiv im Bereich des Kopierfensters symmetrisch und im wesentlichen senkrecht zur Transportrichtung L bewegt. Dies ist dann der wenn die Drehachse D des Objektivkarussells nicht auf oder sehr nahe bei der Mittellinie M der Transportbahn der Kopiervorlage F liegt.

Die erfindungsgemässe Kopiervorrichtung kann selbstverständlich auch für die Verarbeitung von Endlos-Kopiermaterial anstelle von Einzelblättern ausgelegt sein. In diesem Fall entfällt natürlich die Schneideinrichtung 9. Stattdessen ist die Papierbühne 2 mit einer verstellbaren Maske versehen, deren Grösse (Länge) von der Steuerungseinrichtung 10 auf das jeweils festgelegte Kopieformat eingestellt wird.

**Patentansprüche**

1. Vorrichtung zur Herstellung von fotografischen Kopien von einer Kopiervorlage auf einem fotografischen Kopiermaterial, mit einer Vorlagenpositioniereinrichtung (3) zum Transportieren und Positionieren der Kopiervorlage (F) in eine bzw. einer Kopierposition, einer Kopiermaterialpositioniereinrichtung (2a) zum Transportieren und Positionieren des fotografischen Kopiermaterials (P) in eine bzw. einer Belichtungsposition, einer Beleuchtungseinrichtung (4) zur Beaufschlagung der in der Kopierposition befindlichen Kopiervorlage mit Kopierlicht, einem verstellbaren Objektiv (5) zum Abbilden der in der Kopierposition befindlichen Kopiervorlage mit einer einstellbaren Vergrösserung auf das in der Belichtungsposition befindliche Kopiermaterial, einer Objektiveinstelleinrichtung (6) für die Einstellung der Vergrösserung des Objektivs (5), und einer Steuerungseinrichtung (10) für die Vorlagenpositioniereinrichtung (3), die Kopiermaterialpositioniereinrichtung (2a) und die Objektiveinstelleinrichtung (6), dadurch gekennzeichnet, dass das Objektiv (5) im wesentlichen quer zur Transportrichtung (L) der Kopiervorlage (F) verstellbar angeordnet ist.

2. Vorrichtung nach Anspruch 1, dadurch gekennzeichnet, dass die in der Kopierposition befindliche Kopiervorlage (F) und das in der Belichtungsposition befindliche Kopiermaterial (P) relativ gegeneinander verdrehbar angeordnet sind.

3. Vorrichtung nach einem der vorangehenden Ansprüche, dadurch gekennzeichnet, dass zum Verstellen des Objektivs (5) im wesentlichen quer zur Transportrichtung (L) der Kopiervorlage (F) eine mit der Steuerungseinrichtung (10) zusammenwirkende Objektivpositioniereinrichtung (12) vorgesehen ist.

4. Vorrichtung nach Anspruch 3, dadurch gekennzeichnet, dass sie eine mit der Steuerungseinrichtung (10) zusammenwirkende Bedienungseinrichtung (13,14) zur Festlegung eines zu kopierenden Ausschnitts (S) der Kopiervorlage (F) und einer gewünschten Vergrösserung aulweist und dass die Steuerungseinrichtung (10) die Vorlagenpositioniereinrichtung (3), die Objektivpositioniereinrichtung (12) und die Objektiveinstelleinrichtung (6) aufgrund der mittels der Bedienungseinrichtung festgelegten Vergrösserung und des festgelegten Ausschnitts steuert.

5. Vorrichtung nach Anspruch 4, dadurch gekennzeichnet, dass die Bedienungseinrichtung (13,14) Eingabemittel (14) zur manuellen Festlegung des zu kopierenden Ausschnitts (S) der Kopiervorlage (F) und der gewünschten Vergrösserung desselben, einen Bildschirm (13), Mittel (11) zur Darstellung der Kopiervorlage (F) auf dem Bildschirm (13) und Mittel (R) zur Sichtbarmachung des festgelegten Ausschnitts (S) auf dem Bildschirm (13) aufweist.

6. Vorrichtung nach Anspruch 5, dadurch gekennzeichnet, dass die Bedienungseinrichtung (13,14) die Festlegung nur solcher Kombinationen von Ausschnitten und Vergrösserungen zulässt, welche innerhalb der durch das eingesetzte Objektiv (5) und die Abmessungen des eingesetzten Kopiermaterials (P) gegebenen Grenzen liegen.

7. Vorrichtung nach einem der vorangehenden Ansprüche dadurch gekennzeichnet, dass mindestens zwei Objektive (5, 5a) unterschiedlicher Vergrösserungsbereiche vorgesehen sind, welche selektiv in den Kopierstrahlengang (K) einbringbar sind.

8. Vorrichtung nach Anspruch 4 und Anspruch 7, dadurch gekennzeichnet, dass die Steuerungseinrichtung (10) die selektive Einführung der Objektive (5, 5a) in den Kopierstrahlengang (K) aufgrund der mittels der Bedienungseinrichtung (13,14) festgelegten Vergrösserung und des festgelegten Ausschnitts (S) der Kopiervorlage (F) automatisch steuert.

9. Vorrichtung nach Anspruch 7 oder 8, dadurch gekennzeichnet, dass ein von der Steuerungseinrichtung (10) gesteuertes drehbares Objektivkarussell (12) vorgesehen ist, an dem die mindestens zwei Objektive (5, 5a) angeordnet sind und mittels welchem diese selektiv in den Kopierstrahlengang (K) einführbar sind.

10. Vorrichtung nach Anspruch 9, dadurch gekennzeichnet, dass die Objektivpositioniereinrichtung durch das Objektivkarussell (12) gebildet ist.

11. Vorrichtung nach Anspruch 10, dadurch gekennzeichnet, dass das Objektivkarussell (12) in beliebigen Drehstellungen arretierbar ist.

12. Vorrichtung nach Anspruch 11, dadurch gekennzeichnet, dass das Objektivkarussell (12) mit einer mechanischen oder vorzugsweise magnetischen Bremseinrichtung (41a-41d,42) zur Arretierung in einer gewünschten Drehstellung ausgestattet ist.

13. Vorrichtung nach einem der Ansprüche 10-12, dadurch gekennzeichnet, dass die Steuerungseinrichtung (10) die bogenförmige Bewegung der Objektive (5, 5a) am Objektivkarussel (12) durch eine entsprechende Ausgleichsbewegung der Kopiervorlage (F) in bzw. gegen deren Transportrichtung (L) kompensiert.

14. Vorrichtung nach einem der Ansprüche 4-13, dadurch gekennzeichnet, dass eine mit der Steuerungseinrichtung (10) zusammenwirkende Schneideinrichtung (9) zum Abtrennen einzelner Blätter des Kopiermaterials (P) von einem Vorratsband (7) vorgesehen ist, und dass die Steuerungseinrichtung (10) die Länge der abzuschneidenden Blätter (P) aus der mittels der Bedienungseinrichtung (13, 14) festgelegten Vergrösserung und des festgelegten Ausschnitts (S) der Kopiervorlage (F) bestimmt.

*Fig. 1*

Fig. 2

Fig. 3

Fig. 4

Fig. 5

Fig.6

EP 0 902 317 A1

**Europäisches Patentamt**

**EUROPÄISCHER RECHERCHENBERICHT**

Nummer der Anmeldung

EP 97 11 5930

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE 195 18 337 A (AGFA GEVAERT AG) 30.November 1995 * Spalte 2, Zeile 43 - Spalte 4, Zeile 65; Abbildungen 1-3 * | 1-3,7,8 | G03B27/46 G03B27/68 |
| Y | PATENT ABSTRACTS OF JAPAN vol. 008, no. 215 (P-305), 2.Oktober 1984 & JP 59 100428 A (KONISHIROKU SHASHIN KOGYO KK), 9.Juni 1984, * Zusammenfassung * | 1,3,7,8 | |
| Y | US 5 594 525 A (BENKER GERHARD ET AL) 14.Januar 1997 * das ganze Dokument * | 2 | |
| A | US 5 502 540 A (MIYAWAKI HIROSHI ET AL) 26.März 1996 * Spalte 3, Zeile 59 - Spalte 4, Zeile 12; Abbildung 4 * | 1 | |
| A | US 4 837 602 A (TAHARA SYUJI) 6.Juni 1989 * Spalte 2, Zeile 50 - Zeile 65 * * Spalte 4, Zeile 22 - Spalte 6, Zeile 30; Abbildungen 3-5 * | 9 | RECHERCHIERTE SACHGEBIETE (Int.Cl.6) G03B G03D G03G |

Der vorliegende Recherchenbericht wurde für alle Patentansprüche erstellt

| Recherchenort | Abschlußdatum der Recherche | Prüfer |
|---|---|---|
| BERLIN | 16.Februar 1998 | Manntz, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)